# EUROPEAN PATENT SPECIFICATION

(11) **EP 3 711 976 B1**
(45) Date of publication and mention of the grant of the patent: **15.03.2023**
(21) Application number: 18876280.1
(22) Date of filing: 26.09.2018
(51) Int. Cl.: B60C 5/00, B60C 19/00

(54) **TIRE**
REIFEN
PNEU

(30) Priority: 13.11.2017 JP 2017218604
(43) Date of publication of application: 23.09.2020
(60) Divisional application: 21212644.5
(73) Proprietor: Bridgestone Corporation, Tokyo 104-8340 (JP)
(72) Inventor: WATANABE, Jun, Tokyo 104-8340 (JP); SUKEGAWA, Shin, Tokyo 104-8340 (JP)
(74) Representative: Marks & Clerk LLP
(86) International application number: PCT/JP2018/035751
(87) International publication number: WO 2019/093006

(56) References cited:
- EP-A1- 2 135 750
- WO-A1-2008/126506
- JP-A- 2012 126 380
- JP-A- 2012 126 380
- US-A1- 2009 151 837
- US-A1- 2009 151 837

## Description

### TECHNICAL FIELD

This invention relates to a tire, and more particularly, to a low-noise tire having a noise damper on an inner circumferential surface side thereof.

### BACKGROUND

One of tire noises known is a so-called road noise, which sounds like a low growl when travelling on a road, within a frequency range of 50 Hz to 400 Hz. A main cause of the road noise is known to be resonance vibration of air (cavity resonance) that is generated on the inner circumferential surface side of the tire. In order to reduce such road noise, JP43 18639B (PTL 1) proposes a technique that involves fixedly attaching a noise damper to the inner circumferential surface of a tire to absorb the cavity resonance energy.

In addition, WO2016/039121 (PTL 2) describes a technique that involves sandwiching a noise damper between attachment portions provided on the inner circumferential surface of a tire, and holding the noise damper by means of the restoring force of the compressed noise damper.

### CITATION LIST

### Patent Literature

PTL 1: JP4318639B, PTL 2: WO2016/039121. Attention is also drawn to the disclosures of EP 2 135 750 A1 and JP 2012 126380 A, which show tires with a noise damper attached to the tire inner surface through hook fasteners.

### SUMMARY

### (Technical Problem)

However, in the tire described in PTL 1, since the noise damper is fixedly attached to the inner circumferential surface of the tire, heat dissipation from between the inner circumferential surface of the tire and the noise damper is inhibited, and heat easily accumulates therein. Further, in the technique of PTL 2, since the noise damper is sandwiched between multiple planes, heat can not be dissipated at the contact portions with these planes, and the heat dissipation effect is insufficient. As a result, thermal degradation may be accelerated and durability may be lowered.

There is a further demand for a method capable of holding a noise damper more stably than the techniques described in PTLs 1 and 2.

It would thus be helpful to provide a method of stably fixing a noise damper by a simple means without hindering the heat dissipation of the noise damper.

### (Solution to Problem)

The inventor investigated the means for addressing the above issues, and discovered that by fixing a noise damper to multiple pins provided on an inner circumferential surface of a tread portion of a tire, and by devising the shape of the pins, the noise damper can be stably fixed without hindering the heat dissipation of the noise damper.

A tire according to the present invention is as claimed in claim 1. Optional features are set out in the dependent claims.
As used herein, the term "lock" means that the noise damper is fixed to the expanded-diameter portion by being brought into contact with at least a part of the expanded-diameter portion, and as a result, the expanded-diameter portion serves as a stopper for preventing the noise damper from coming out of the pins inward in the tire radial direction.

### (Advantageous Effect)

According to the present invention, it is possible to provide a tire in which a noise damper is stably fixed by simple means without hindering the heat dissipation of the noise damper.

### BRIEF DESCRIPTION OF THE DRAWINGS

In the accompanying drawings:
FIG. 1 is a cross-sectional view of a tire according to one of the embodiments of the present invention;
FIG. 2 is an enlarged perspective view for explaining one form of each pin provided in the tire of FIG. 1;
FIG. 3 is an enlarged cross-sectional view of a part of the tire of FIG. 1;
FIG. 4A is a cross-sectional view illustrating a variation of the pin;
FIG. 4B is a cross-sectional view illustrating another variation of the pin;
FIG. 5 is a cross-sectional view illustrating another example of the inner reinforcing structure of the tire of FIG. 1;
FIG. 6 is a cross-sectional view of a tire according to another embodiment of the present invention; and
FIG. 7 is a cross-sectional view illustrating another example of the inner reinforcing structure of the tire of FIG 6.

### DETAILED DESCRIPTION

The following provides a description of embodiments of the tire according to the present invention with reference to the accompanying drawings. In the drawings, like reference numerals refer to like parts throughout the various views unless otherwise specified.

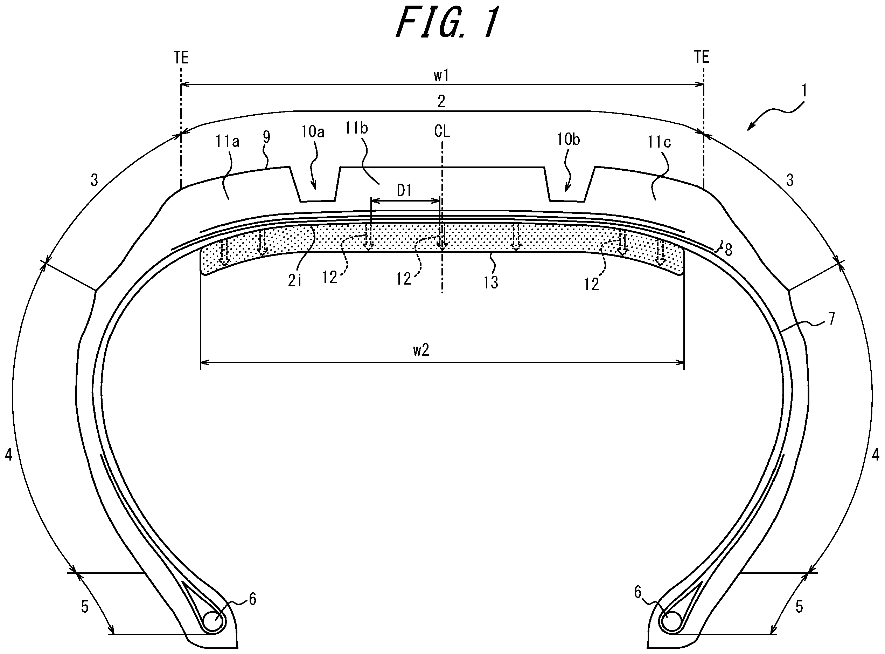

FIG. 1 is a cross-sectional view of a tire according to one of the embodiments of the present invention.
A tire 1 comprises: a tread portion 2; a pair of sidewall portions 4 continuous with respective ends of the tread portion 2 in a tire width direction via a shoulder portion 3; and a pair of bead portions 5 provided at respective ends continuous with the pair of sidewall portions 4 inward in a tire radial direction.

The inner reinforcing structure and the like of the tire disclosed herein may be freely chosen. For example, in FIG. 1, the inner reinforcing structure and the like of the tire are similar to those of a regular tire. Specifically, the tire 1 comprises: a carcass 7 extending toroidally between a pair of bead cores 6; one or more (in this example, two) belt layers 8 arranged outward in the tire radial direction from the carcass 7; and a tread layer 9 arranged outward in the tire radial direction from the belt layers 8. Although the tread layer 9 may have any tread pattern, in FIG. 1, land portions 11a, 11b, and 11c are defined by circumferential grooves 10a and 10b.

The tire 1 comprises: at least one pin 12 protruding inward in the tire radial direction from an inner circumferential surface 2i of the tread portion 2; and a noise damper 13. In the illustrated embodiment, seven pins 12 are arranged in a row in the tire width direction, and similar rows are arranged in the tire circumferential direction at equal or unequal intervals. The noise damper 13 is an annular body that is made of a sponge material, that has a width equal to or smaller than a tread width of the tire and is continuous in the tire circumferential direction, and that is caught by the pins 12 so as to be attached to the inner circumferential surface 2i of the tread portion 2.

The noise damper 13 made of a sponge material has a function such that voids formed on the surface and inside thereof convert the vibration energy of the vibrating air into heat energy. This suppresses cavity resonance on the inside of the tire, resulting in reduced road noise. As described above, the noise damper 13 is an annular body that is continuous over the entire region in the tire circumferential direction, and that is arranged on the inner circumferential surface 2i of the tread portion 2 with both ends in the tire circumferential direction abutting against each other. In the tire width direction, the noise damper 13 extends across a tire equatorial plane CL up to a length w2 smaller than a tire widthwise length w1 of the tread portion 2. Although the noise damper 13 is arranged symmetrically about the tire equatorial plane CL in FIG. 1, it may be arranged asymmetrically.

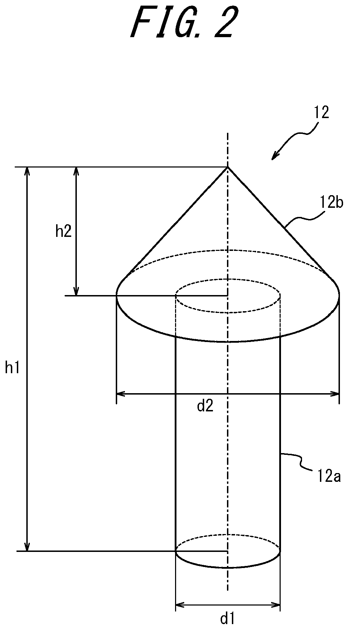

The following provides further details of the structure for catching the noise damper 13 by the pins 12. Specifically, FIG. 2 is an enlarged perspective view for explaining one form of each pin provided in the tire of FIG. 1. In FIG. 2, the pin 12 is illustrated in an inverted orientation in the tire radial direction to that in FIG. 1, and the noise damper 13 is omitted. As illustrated in FIG. 2, each pin 12 is formed from a main body portion 12a having a cylindrical shape and an expanded-diameter portion 12b having a diameter larger than that of the main body portion 12a at the distal end of the main body portion 12a. The expanded-diameter portion 12b may have any shape as long as it has a maximum diameter larger than the diameter of the main body portion 12a. In the illustrated example, each pin is formed from a conical body having a disk-shaped bottom with a diameter larger than the diameter of the main body portion 12a. However, each pin may be formed from, for example, any conic solid other than a cone, a sphere, a hemisphere, or a column. In order to facilitate insertion of each pin 12 into the noise damper 13, it is preferable to use a conic solid whose diameter gradually decreases toward the tip.

The main body portion 12a of each pin 12 may have any shape as long as it does not become an obstacle that hinders insertion of the pin 12 into the noise damper 13. In the illustrated example, each pin has a cylindrical shape extending at a constant diameter, yet it may be an elliptical cylinder or a polygonal prism. In addition, the diameter may not be constant. When an elliptical cylinder shape is used, the major axis of the ellipse is preferably arranged parallel to the tire circumferential direction. The reason is that when the tire is rolling, an input is applied to the pins 12 along the tire circumferential direction, and the pins 12 can be hardly bent by having a shape that is long in the tire circumferential direction.

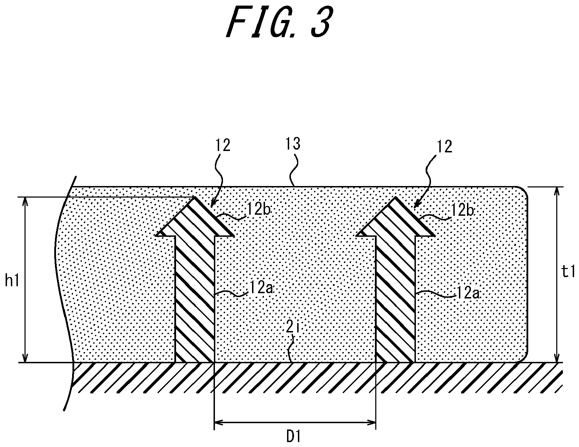

Referring now to FIG. 3, the structure for catching the noise damper 13 by the pins 12 having the above-described shape is described. FIG. 3 is an enlarged cross-sectional view illustrating a part of the tire of FIG. 1 in an inverted orientation in the tire radial direction to that in FIG. 1. In this embodiment, by inserting the expanded-diameter portions 12b of the pins 12 into the noise damper 13, the expanded-diameter portions 12b function as so-called stoppers in the noise damper 13 to prevent the noise damper 13 from coming out of the pins 12 inward in the tire radial direction. That is, in each pin 12 provided on the inner circumferential surface 2i of the tread portion 2, the expanded-diameter portion 12b having a diameter larger than that of the main body portion 12a functions as if it were a harpoon barb and serves as a stopper for preventing the noise damper 13 from coming out of the pin. In this way, the noise damper 13 is securely fixed to the pins 12. Therefore, the noise damper 13 can be stably fixed by a simple means.

Further, with this configuration, the noise damper 13 is not fixedly attached to the inner circumferential surface 2i of the tread portion 2, but rather lightly contacts the inner circumferential surface 2i. Therefore, heat dissipation from between the inner circumferential surface of the tire and the noise damper will not be hindered. Further, as the noise damper 13 is deformed while the tire is rolling, gaps are formed between the noise damper 13 and the inner circumferential surface 2i, allowing heat dissipation from the gaps. In addition, since both ends of the noise damper 13 in the tire width direction are open ends, a heat dissipation effect is also obtained from these ends.

In the illustrated example, the noise damper 13 and the inner circumferential surface 2i of the tread portion 2 are in contact with, rather than being fixedly attached to, each other. However, the noise damper 13 may be separated from the inner circumferential surface 2i of tread portion 2. With such a configuration, it is possible to further improve the heat dissipation performance as compared with the configuration in which the noise damper 13 constantly contacts the inner circumferential surface 2i.

In this case, the pins 12 are arranged in correspondence with land portions 11a to 11c of the tread portion 2. That is, in FIG. 1, the pins 12 are respectively arranged in correspondence with the land portions 11a, 11b, and 11c of the tread section 2, but are not arranged in the regions corresponding to circumferential grooves 10a and 10b. In other words, while the tire is rolling, the tread portion 2 is deformed, and the deformation is apt to propagate, in particular, toward the inner circumferential surface of the tire at the locations where the grooves are formed. When pins 12 are disposed in such groove regions, the pins 12 may be distorted or produce heat due to the propagated deformation. Therefore, by arranging the pins 12 in correspondence with the land portions 11a to 11c, such inconvenience can be avoided.

Furthermore, at least some of the pins 12 are preferably arranged on and around the tire equatorial plane CL. While the tire is rolling, the tire inner circumferential surface is repeatedly deformed, and particularly in those regions on and near the tire equatorial plane CL, the tire inner circumferential surface is subject to a large strain. Therefore, by arranging the pins 12 in such regions, it is possible to prevent the noise damper 13 from falling off while the tire is rolling, and to improve the stabilization.

It is also preferable to arrange the pins 12 at a number density of 0.01 pcs/cm² or more and 0.4 pcs/cm² or less on the inner circumferential surface 2i of the tread portion 2. That is, on the inner circumferential surface of the tread portion 2, by setting the number density to 0.01 pcs/cm² or more, the noise damper 13 can be stably fixed, and by setting the number density to 0.4 pcs/cm² or less, it is possible to suppress a decrease in rigidity of the noise damper 13 itself.

The shortest distance D1 between adjacent pins 12 is preferably larger than a tire radial direction length h1 (hereinafter, simply referred to as the "length") of the pins 12. With this configuration, heat buildup or damages due to contacts between the pins 12 can be prevented when pins 12 are deformed while the tire is rolling.
It is also preferable that the shortest distance D1 between adjacent pins 12 be 150 % or less relative to the length h1, not only in the tire width direction, but also in the tire circumferential direction. At or below 150 %, the noise damper 13 can be stably fixed.

When emphasizing the stable fixing of the noise damper 13, the shortest distance D1 between adjacent pins 12 may be smaller than the tire radial direction length h1 of the pins 12. Preferably, the shortest distance D1 is 80 % or less of the length h1.

The length h1 of the pins 12 is preferably 25 % or more relative to the maximum thickness t1 of the noise damper 13. By setting hl/tl to 25 % or more, the noise damper 13 can be stably fixed.
The length h1 of the pins 12 may be, for example, 5 mm or more and 50 mm or less. By setting the length h1 to 5 mm or more, it is possible to stably fix the noise damper 13, and by setting the length h1 to 50 mm or less, it is possible to improve the workability for mounting the tire to a rim.

It is also preferable that a tire radial direction length h2 of the expanded-diameter portion 12b of each pin 12 is 10 % or more and 50 % or less relative to the entire length h1 of each pin 12. Within the above numerical ranges, it is possible to increase the rigidity of the pins 12, while sufficiently suppressing removal of the noise damper 13 from the pins 12.

Regarding the diameter of each pin 12, the expanded-diameter portion 12b has a maximum diameter part having a diameter d2 of preferably 110 % or more and 200 % or less relative to the maximum diameter d1 of the main body portion 12a. When d2/d1 is set to 110 % or more, the expanded-diameter portion 12b can sufficiently function as a stopper for the noise damper 13, and when d2/d1 is set to 200 % or less, rigidity of the pins 12 can be ensured.

More specifically, for example, the diameter d2 of the maximum diameter part of the expanded-diameter portion 12b may be set to 4.0 mm or more and 25.0 mm or less, and the maximum diameter d1 of the main body portion 12a to 2.0 mm or more and 20.0 mm or less. The maximum diameter d1 is preferably 2.0 mm or more and 5.0 mm or less.
Moreover, the value of the diameter d2 minus the maximum diameter d1 is preferably within a range of 2.0 mm to 5.0 mm. Within this range, it is possible to cause the pins 12 to function as a stopper for the noise damper 13, while maintaining rigidity.

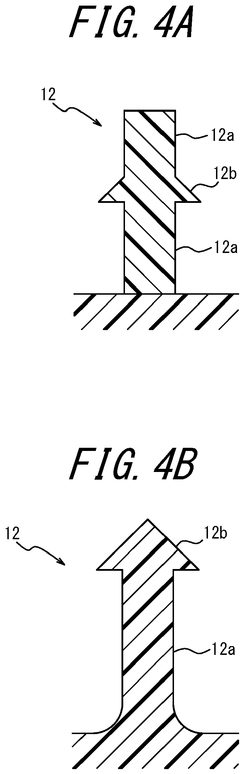

The shape of the pins is not limited to that illustrated in FIG. 2, and may be, for example, the one illustrated in FIG. 4A. In FIGS. 1 to 3, the expanded-diameter portion 12b is formed at the most distal end of the pin 12, that is, on the innermost side of the pin 12 in the tire radial direction. However, it suffices for the expanded-diameter portion 12b to be formed on the distal end side of the pin 12, that is, further inward in the tire radial direction than the center of the tire radial direction length of the pin 12. As illustrated in FIG. 4A, the expanded-diameter portion 12b may be arranged substantially at the center in the tire radial direction of the pin 12. With this configuration, durability of the pin 12 can be increased.

Moreover, as illustrated in FIG. 4B, each pin 12 may have, on its proximal end side, a plane with a curvature as its outline shape near a boundary with the inner circumferential surface 2i of the tread portion. As described above, by making the shape of each pin 12 smoothly continuous with the inner circumferential surface 2i, it is possible to suppress the occurrence of cracks at the boundaries between the pins 12 and the inner circumferential surface 2i.

In addition to the aspect in which the noise damper 13 is continuous over the entire circumference as described above, the noise damper 13 may be configured to have both ends in the tire circumferential direction that are spaced apart from each other with a slight gap. In addition, the noise damper 13 may be an annular body in which a sheet-like sponge material is wound around more than once in the tire circumferential direction while shifting the material to the tire width direction so as not to cause overlaps of material turns. Moreover, in the noise damper 13, a plurality of sheet-like sponge materials may be intermittently arranged at intervals in the tire circumferential direction, or a plurality of sponge materials continuous over the entire circumference may be arranged in the tire width direction.

The noise damper 13 is preferably arranged in a region w2 that extends across the tire equatorial plane CL up to 25 % or more of the tire widthwise length w1 of the tread portion 2. Within the range of 25 % or more, the effect of reducing the cavity resonance energy of the noise damper 13 can be sufficiently obtained.

It is also preferable that the noise damper 13 satisfy the following numerical ranges in a standard state in which the tire is mounted on an applicable rim, applied with a prescribed internal pressure, and then unloaded. As used herein, an "applicable rim" refers to a rim specified currently or in the future by the standards below in accordance with tire size. The "applicable rim" refers to a standard rim ("approved rim" or "recommended rim") of applicable size specified in accordance with valid industrial standards for the region in which the tire is produced or used, such as the "JATMA Year Book" of the Japan Automobile Tire Manufacturers Association in Japan, "The European Tyre and Rim Technical Organisation Standards Manual" in Europe, and "The Tire and Rim Association, Inc. Year Book" in the United States of America (that is, the "rim" mentioned above includes, in addition to the current size, the size that can be included in these industry standards in the future; for example, the size described in "FUTURE DEVELOPMENTS" in the ETRTO 2013 edition). On the other hand, for a size not described in the above industrial standards, it refers to a rim having a width corresponding to the bead width of the pneumatic tire.
In addition, "specified internal pressure" refers to air pressure (maximum air pressure) specified in the JATMA YEAR BOOK and so on in accordance with the maximum load capability of a single wheel in the applicable size ply rating. For a size not described in the above industrial standards, it refers to air pressure (maximum air pressure) in accordance with the maximum load capability specified for each vehicle on which the tire is mounted.

In the standard state in which the tire is mounted on an applicable rim, it is preferable that when the space formed by the inner circumferential surface of the tire 1 and the outer surface of the rim on which the tire 1 is mounted is referred to as a tire lumen In, the noise damper 13 have a volume V1 that is 0.4 % to 20 % of the total volume of the tire lumen In. By guaranteeing 0.4 % or more for the volume V1 of the noise damper 13 relative to the total volume of the tire lumen In, it is possible to obtain the effect of reducing the cavity resonance energy by a desired amount (for example, by 2 dB or more) more easily. The noise damper 13 more preferably accounts for 1 % or more, even more preferably 2 % or more, and particularly preferably 4 % or more of the total volume of the tire lumen In. On the other hand, increasing the volume V1 of the noise damper 13 beyond 20 % of the total volume of the tire lumen In can no longer increase the effect of reducing the cavity resonance energy. Rather, this may end up causing deterioration in the weight-balance in a state mounted on a rim. From this viewpoint, the volume V1 of the noise damper 13 is more preferably 16 % or less, and particularly preferably 10 % or less of the total volume of the tire lumen In. The above-mentioned volume ratio is not related to the number of noise dampers 13. That is, when a plurality of noise dampers 13 are used, the same effect can be obtained if the sum of the volumes of all of the noise dampers 13 satisfies the above-mentioned relationship of the volume ratio.

As described above, the noise damper 13 is formed from a sponge material. The sponge material is a sponge-like porous structure, and includes, for example, a so-called sponge having open cells formed by foaming rubber or a synthetic resin. In addition to the above-described sponge, the sponge material includes a web-like sponge in which animal fibers, plant fibers, synthetic fibers, and the like are interlaced and integrally connected. The "porous structure" is not limited to a structure having open cells, and includes a structure having closed cells.

In addition, the sponge material is easily deformed by contraction, bending, or the like. Therefore, even if the noise damper 13 made of a sponge material is in contact with the inner circumferential surface 2i of the tread, this condition does not substantially affect the deformation of the tire 1 during traveling.

Examples of raw materials of the sponge material include synthetic resin sponge such as ether-based polyurethane sponge, ester-based polyurethane sponge, and polyethylene sponge, and rubber sponge such as chloroprene rubber sponge (CR sponge), ethylene propylene rubber sponge (EPDM sponge), and nitrile rubber sponge (NBR sponge). From the perspectives of, for example, noise damping, light weight, foaming adjustability, and durability, it is preferable to use a polyurethane- or polyethylene-based sponge including ether-based polyurethane sponge, and so on.

Note that the material forming the noise damper 13 is not limited to the sponge material described above, and may be any material as long as it can be controlled so as to reduce the cavity resonance energy by relaxing or absorbing the energy, converting the energy to another (for example, thermal energy), and so on.

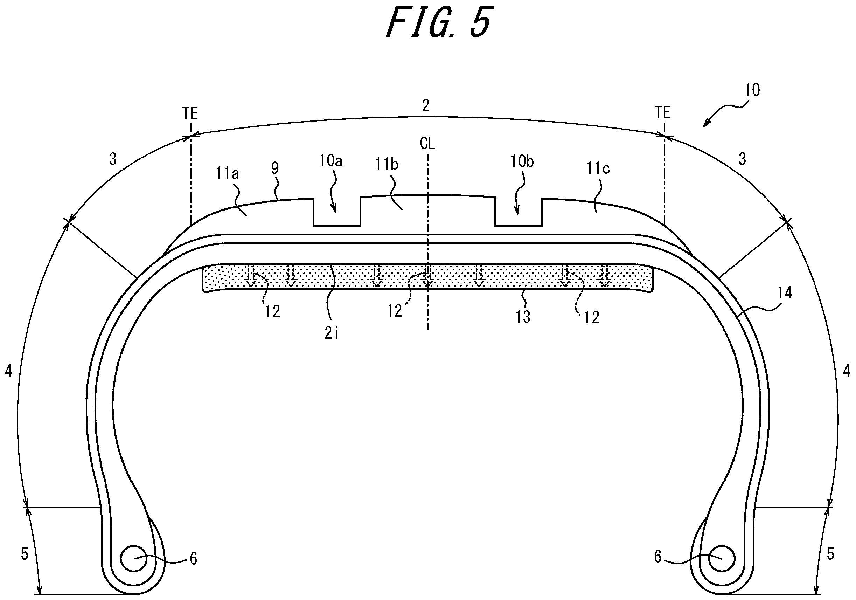

Although a typical tire structure has been described as the inner reinforcing structure of the tire 1, the tire may have a structure including framework parts made of resin. An exemplary tire using resin will be described below with reference to FIG. 5. A tire 10 of FIG. 5 comprises a resin tire framework member 14 extending toroidally between bead cores 6 embedded in a pair of bead portions 5, across the bead portions, sidewall portions 4, a shoulder portion 3, and a tread portion 2. With this configuration, it is possible to improve the formability at the time of manufacturing and reduce the weight of the tire.

In the tire 10 of FIG. 5, the bead cores 6 may be made of any material as long as it guarantees a desired rigidity, including, for example, metals, organic fibers, organic fibers coated with resin, and hard resin. Examples of the resin may include thermoplastic resin, thermoplastic elastomers (TPEs), and thermosetting resin.

In addition, examples of the resin of the tire framework member 14 may include, similarly to the bead cores 6, thermoplastic resin, thermoplastic elastomers (TPEs), and thermosetting resin. However, it is preferable to use a thermoplastic elastomer in view of the elasticity when the vehicle is driven and the formability during manufacturing.

As the thermoplastic elastomers may be used amide-based thermoplastic elastomers (TPAs), ester-based thermoplastic elastomers (TPCs), olefin-based thermoplastic elastomers (TPOs), styrene-based thermoplastic elastomers (TPSs), urethane-based thermoplastic elastomers (TPUs), thermoplastic rubber crosslinkers (TPVs), and other thermoplastic elastomers (TPZs) prescribed in the Japanese Industrial Standard (JIS) K6418.

As the thermoplastic resin may be used a material having a deflection temperature under load (under a load of 0.45 MPa) prescribed in ISO75-2 or ASTM D648 of 78 °C or higher, a tensile yield strength in JIS K7113 of 10 MPa or more, a tensile elongation at break (JIS K7113) in JIS K7113 of 50 % or more, and a Vicat softening temperature (method A) in JIS K7206 of 130 °C or higher. The resin 4a covering the wire 4b preferably has a tensile elastic modulus (as prescribed in JIS K7113:1995) of 50 MPa or more.

Each pin 12 may be made of any material, yet is preferably made of the same material as that of the framework member 14 and formed integrally therewith. For example, as in the framework member 14, thermoplastic resin, thermoplastic elastomers (TPEs), or thermosetting resin may be used.
With the above configuration, the framework member 14 and the pins 12 have no interface in between such that a continuous member is formed, making it possible to suppress the generation of cracks at the interface between the pins 12 and the framework member 14 (the inner circumferential surface 2i). Moreover, the framework member 14 and the pins 12 can be molded at one time, which improves productivity of the tire.

### [Second Embodiment]

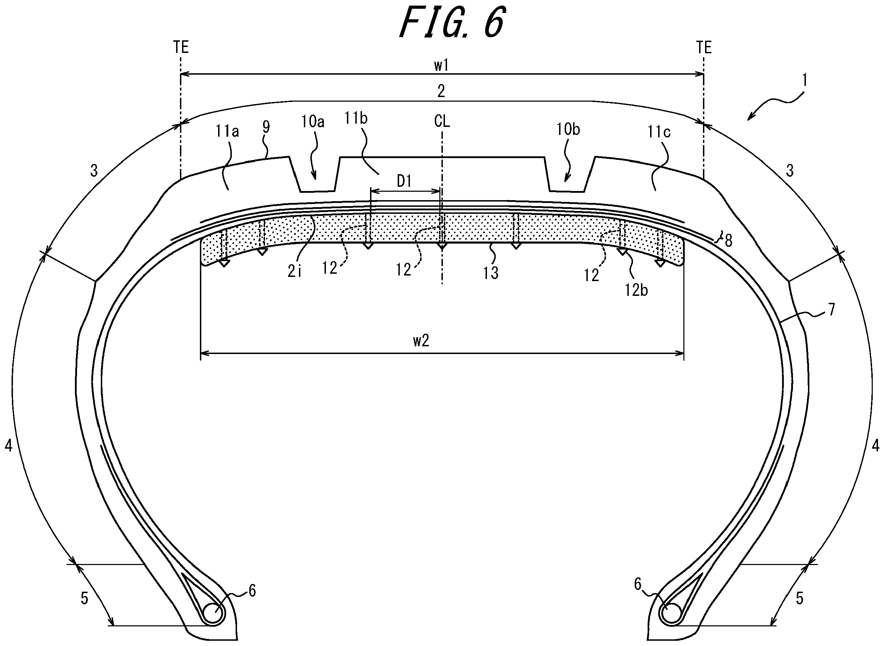

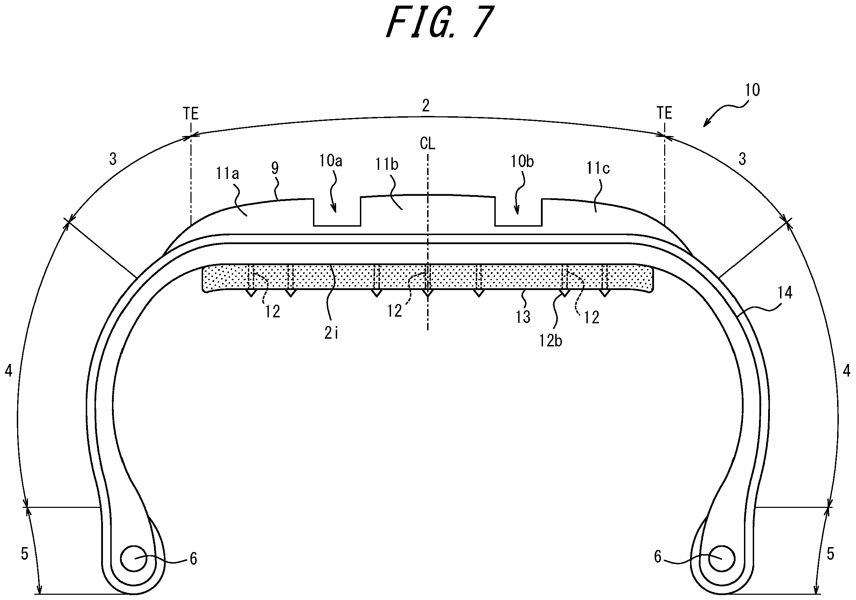

Referring now to FIGS. 6 and 7, a second embodiment of the tire according to the present invention will be described. A tire 1 illustrated in FIG. 6 is a tire having an inner reinforcing structure similar to that of the tire 1 in FIG. 1, and a tire 10 illustrated in FIG. 7 is a tire having a framework member made of resin similar to the tire 10 in FIG. 5. The tires 1 of FIGS. 6 and 7 are configured in the same way as in the tire according to the first embodiment except for the mode in which the noise damper 13 is locked by the pins 12.

In FIGS. 6 and 7, the expanded-diameter portion 12b of the pins 12 are exposed to the tire radial direction inner side of the noise damper 13. The expanded-diameter portion 12b functions as a stopper for preventing the noise damper 13 from coming out of the pins 12 inward in the tire radial direction. That is, the expanded-diameter portion 12b supports, by its maximum diameter part, the noise damper 13 from the tire radial direction inner surface such that the noise damper 13 is fixed. In this way, the noise damper 13 can be stably fixed by a simple means. Moreover, as in the tire according to the first embodiment, since the noise damper 13 is not fixedly attached to any part of of the tread portion 2, such as the inner circumferential surface 2i, heat is less likely to build up between the noise damper 13 and the inner circumferential surface 2i, and furthermore, heat dissipation is accomplished from between the noise damper 13 and the inner circumferential surface 2i and from both ends in the tire width direction of the noise damper 13.

In the examples illustrated in FIGS. 6 and 7, the inner circumferential surface 2i of the tread portion 2 and the noise damper 13 are in contact with, without being fixedly attached to, each other in any of the embodiments. However, the noise damper 13 may be separated from the inner circumferential surface 2i of the tread portion 2. With this configuration, the heat dissipation performance can be further enhanced compared to the configuration in which the noise damper is in contact with the inner circumferential surface while the tire is not rolling.

In this embodiment, it is preferable that the tire radial direction length h1 of the pins 12 be more than 100 % and not more than 130 % relative to the largest thickness t1 of the noise damper 13. By setting hl/tl to be more than 100 %, it is possible to expose the pins 12 to the inside in the tire radial direction of the noise damper 13, and by setting hl/tl to be not more than 130 %, it is possible to prevent deterioration in the durability of the pins 12 due to excessive exposure of the pins.
The tire radial direction length h1 of the pins 12 may be, for example, 5 mm or more and 50 mm or less. By setting the length h1 to 5 mm or more, it is possible to stably fix the noise damper 13, and by setting the length to 50 mm or less, it is possible to improve the workability for mounting the tire to a rim.

### REFERENCE SIGNS LIST

1: tire
2: tread portion
2i: inner surface
3: shoulder portion
4: sidewall portion
5: bead portion
6: bead core
7: carcass
8: belt layer
9: tread layer
10a, 10b: circumferential groove
11a, 11b, 11c: land portion
12: pin
12a: expanded-diameter portion
12b: main body
13: noise damper
14: framework member

## Claims

1. A tire (1) comprising: at least one pin (12) protruding from an inner circumferential surface of a tread portion (2) of the tire (1) toward a tire radial direction inner side; and a noise damper (13) caught by the at least one pin (12),
wherein
the at least one pin (12) has, on its distal end, an expanded-diameter portion (12a)
by which the noise damper (13) is locked such that the noise damper (13) is fixed to the pin (12), **characterized in that**
the at least one pin (12) is arranged in correspondence with a land portion (11a, 11b, 11c) of the tread portion (2) of the tire (1), and **in that**
no pins (12) are arranged in the regions corresponding to circumferential grooves (10a, 10b) which are provided to the tread portion (2) of the tire (1).

2. The tire (1) according to claim 1, wherein the expanded-diameter portion (12a) is located within the noise damper (13).

3. The tire (1) according to claim 1, wherein the expanded-diameter portion (12a) is exposed to a tire radial direction inner side of the noise damper (13).

4. The tire (1) according to any one of claims 1 to 3, comprising a framework member (14) made of resin.

5. The tire (1) according to claim 4, wherein the framework member (14) made of resin and the at least one pin (12) are made of the same material and are integrally formed.

6. The tire (1) according to any one of claims 1 to 5, wherein the at least one pin is arranged at a number density of 0.01 pcs/cm² to 0.4 pcs/cm² on the inner circumferential surface of the tread portion.

7. The tire (1) according to any one of claims 1 to 6, wherein the at least one pin (12) comprises a plurality of pins (12) and a shortest distance between the pins (12) is larger than a tire radial direction length of the pins (12).

8. The tire (1) according to any one of claims 1 to 7, wherein the expanded-diameter portion (12a) is a conic solid having an apex inward in the tire radial direction.

9. The tire (1) according to any one of claims 1 to 8, wherein the at least one pin (12) has, on its proximal end side, a plane with a curvature as its outline shape near a boundary with the inner circumferential surface of the tread portion (2).

## Patentansprüche

1. Reifen (1), der Folgendes umfasst: mindestens einen Stift (12), der von einer Innenumfangsfläche eines Laufflächenabschnitts (2) des Reifens (1) hin zu einer in Reifenradialrichtung inneren Seite vorspringt, und einen Geräuschdämpfer (13), der durch den mindestens einen Stift (12) gehalten wird,
wobei
der mindestens eine Stift (12), an seinem distalen Ende, einen Abschnitt mit erweitertem Durchmesser (12a) aufweist,
durch den der Geräuschdämpfer (13) derart arretiert wird, dass der Geräuschdämpfer (13) an dem Stift (12) fixiert ist, **dadurch gekennzeichnet, dass**
der mindestens eine Stift (12) in Übereinstimmung mit einem Landabschnitt (11a, 11b, 11c) des Laufflächenabschnitts (2) des Reifens (1) angeordnet ist, und dadurch, dass
keine Stifte (12) in den Bereichen angeordnet sind, die umlaufenden Rillen (10a, 10b) entsprechen, die an dem Laufflächenabschnitt (2) des Reifens (1) bereitgestellt werden.

2. Reifen (1) nach Anspruch 1, wobei der Abschnitt mit erweitertem Durchmesser (12a) innerhalb des Geräuschdämpfers (13) angeordnet ist.

3. Reifen (1) nach Anspruch 1, wobei der Abschnitt mit erweitertem Durchmesser (12a) zu einer in Reifenradialrichtung inneren Seite des Geräuschdämpfers (13) freigelegt ist.

4. Reifen (1) nach einem der Ansprüche 1 bis 3, der ein Gerüstelement (14) umfasst, das aus Harz hergestellt ist.

5. Reifen (1) nach Anspruch 4, wobei das Gerüstelement (14), das aus Harz hergestellt ist, und der mindestens eine Stift (12) aus dem gleichen Material hergestellt sind und integral geformt sind.

6. Reifen (1) nach einem der Ansprüche 1 bis 5, wobei der mindestens eine Stift mit einer Anzahldichte von 0,01 Stck./cm² bis 0,4 Stck./cm² auf der Innenumfangsfläche des Laufflächenabschnitts angeordnet ist.

7. Reifen (1) nach einem der Ansprüche 1 bis 6, wobei der mindestens eine Stift (12) eine Vielzahl von Stiften (12) umfasst und ein kürzester Abstand zwischen den Stiften (12) größer ist als eine Länge der Stifte (12) in Reifenradialrichtung.

8. Reifen (1) nach einem der Ansprüche 1 bis 7, wobei der Abschnitt mit erweitertem Durchmesser (12a) ein konischer Festkörper ist, der einen Scheitel in der Reifenradialrichtung nach innen aufweist.

9. Reifen (1) nach einem der Ansprüche 1 bis 8, wobei der mindestens eine Stift (12), auf seiner proximalen Endseite, eine Ebene mit einer Krümmung als seine Umrissform nahe einer Grenze mit der Innenumfangsfläche des Laufflächenabschnitts (2) aufweist.

## Revendications

1. Bandage pneumatique (1), comprenant : au moins une goupille (12) débordant depuis une surface circonférentielle interne d'une partie de bande de roulement (2) du bandage pneumatique (1) vers un côté interne, dans une direction radiale du bandage pneumatique ; et un amortisseur de bruit (13) retenu par la au moins une goupille (12),
dans lequel
la au moins une goupille(12) comporte, sur son extrémité distale, une partie à diamètre élargi (12a) ;
par laquelle l'amortisseur de bruit (13) est verrouillé, de sorte que l'amortisseur de bruit (13) est fixé sur la goupille (12) ; **caractérisé en ce que** :
la au moins une goupille (12) est agencée en correspondance avec une portion en relief (11a, 11b, 11c) de la partie de bande de roulement (2) du bandage pneumatique (1) ; et **en ce que** :
aucune goupille (12) n'est agencée dans les régions correspondant à des rainures circonférentielles (10a, 10b) qui sont fournies sur la partie de bande de roulement (2) du bandage pneumatique (1).

2. Bandage pneumatique(1) selon la revendication 1, dans lequel la partie à diamètre élargi (12a) est située à l'intérieur de l'amortisseur de bruit (13).

3. Bandage pneumatique (1) selon la revendication 1, dans lequel la partie à diamètre élargi (12a) est exposée au côté interne, dans la direction radiale du bandage pneumatique, de l'amortisseur de bruit (13).

4. Bandage pneumatique (1) selon l'une quelconque des revendications 1 à 3, comprenant un élément d'ossature (14) composé de résine.

5. Bandage pneumatique (1) selon la revendication 4, dans lequel l'élément d'ossature (14) composé de résine et la au moins une goupille (12) sont composés du même matériau et sont formés d'une seule pièce.

6. Bandage pneumatique (1) selon l'une quelconque des revendications 1 à 5, dans lequel la au moins une goupille est agencée à une densité numérique de 0,01 pièces/cm² à 0,4 pièces/cm² sur la surface circonférentielle interne de la partie de bande de roulement.

7. Bandage pneumatique (1) selon l'une quelconque des revendications 1 à 6, dans lequel la au moins une goupille (12) comprend une pluralité de goupilles (12), et une distance minimale entre les goupilles (12) est supérieure à une longueur, dans la direction radiale du bandage pneumatique, des goupilles (12).

8. Bandage pneumatique (1) selon l'une quelconque des revendications 1 à 7, dans lequel la partie à diamètre élargi (12a) est un solide conique ayant un sommet vers l'intérieur, dans la direction radiale du bandage pneumatique.

9. Bandage pneumatique (1) selon l'une quelconque des revendications 1 à 8, dans lequel la au moins une goupille (12) comporte, sur son côté d'extrémité proximale, un plan avec une courbure comme sa forme de contour près d'une frontière avec la surface circonférentielle interne de la partie de bande de roulement (2).
